(19) **Europäisches Patentamt / European Patent Office / Office européen des brevets**

(11) **EP 3 227 635 B1**

(12) **FASCICULE DE BREVET EUROPEEN**

(45) Date de publication et mention de la délivrance du brevet:
**26.12.2018 Bulletin 2018/52**

(21) Numéro de dépôt: **15808765.0**

(22) Date de dépôt: **30.11.2015**

(51) Int Cl.:
*G01C 21/20* (2006.01)  *G01B 21/20* (2006.01)
*G01C 21/00* (2006.01)  *G01C 21/10* (2006.01)
*G01B 21/06* (2006.01)  *G01C 7/06* (2006.01)
*G01C 21/12* (2006.01)  *G01S 3/808* (2006.01)
*G01S 13/72* (2006.01)  *G01C 21/14* (2006.01)
*G05D 1/10* (2006.01)

(86) Numéro de dépôt international:
**PCT/FR2015/053255**

(87) Numéro de publication internationale:
**WO 2016/087755 (09.06.2016 Gazette 2016/23)**

(54) **PROCEDE ET CALCULATEUR ELECTRONIQUE POUR DETERMINER LA TRAJECTOIRE D'UN OBJET MOBILE**

VERFAHREN UND ELEKTRONISCHER RECHNER ZUR BESTIMMUNG DER BEWEGUNGSBAHN EINES SICH BEWEGENDEN OBJEKTS

METHOD AND ELECTRONIC CALCULATOR FOR DETERMINING THE TRAJECTORY OF A MOBILE OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2014 FR 1461695**

(43) Date de publication de la demande:
**11.10.2017 Bulletin 2017/41**

(73) Titulaire: **Commissariat à l'énergie atomique et aux énergies alternatives
75015 Paris (FR)**

(72) Inventeurs:
• **JOUANET, Laurent**
  **38880 Autrans (FR)**
• **CARMONA, Mikaël**
  **38570 Tencin (FR)**
• **SPRYNSKI, Nathalie**
  **38830 Saint Pierre d'Allevard (FR)**

(74) Mandataire: **GIE Innovation Competence Group
310, avenue Berthelot
69372 Lyon Cedex 08 (FR)**

(56) Documents cités:
**EP-A2- 0 366 567      GB-A- 2 086 055
US-A1- 2008 195 316**

**Description**

L'invention concerne un procédé pour déterminer la trajectoire d'un objet mobile. L'invention concerne également un procédé pour détecter l'écart entre la trajectoire d'un objet mobile et une trajectoire de référence. L'invention concerne enfin un calculateur électronique et un support d'enregistrement pour mettre en oeuvre ces procédés.

US2008/0195316 décrit un dispositif d'estimation de mouvement basé sur deux capteurs d'image et une centrale inertielle, fixés d'un seul bloc sur un véhicule pour se localiser par rapport à des caractéristiques d'intérêt de l'environnement. Le document décrit également une centrale inertielle fixée sur un objet mobile et l'analyse de la position de l'objet mobile par des capteurs d'images. En analysant les images à différents moments et en identifiant des caractéristiques d'intérêt dans ces images, en croisant avec les mesures de la centrale inertielle, ce document détermine le déplacement de l'objet à partir de l'évolution de position des caractéristiques d'intérêt. La présence de deux capteurs d'image est utilisée pour réaliser une analyse stéréoscopique de la position des caractéristiques d'intérêt. Le document recherche la présence d'un même point caractéristique sur les deux images à un même instant.

Il existe des systèmes et des procédés pour déterminer la trajectoire d'un objet mobile lorsque ce dernier se déplace dans l'espace, par exemple dans un conduit. Un exemple est décrit dans la demande de brevet GB-2086055-A (Sunstrand Data Control). Deux jeux d'accéléromètres espacés d'une distance L mesurent l'inclinaison en différents points du conduit. Les mesures sont recueillies tout au long du parcours de l'objet dans le conduit. La distance totale parcourue est mesurée par un capteur dédié (« cable length transducer 28 ») au niveau d'un dérouleur de câble.

Ce système présente cependant l'inconvénient que ces mesures sont réalisées au moyen de capteurs qui présentent des contraintes d'utilisation particulières. Par exemple, les mesures ne peuvent être réalisées que si la trajectoire de l'objet respecte certaines propriétés (par exemple, elle doit être orientée dans le sens de la pesanteur (par exemple ici du fait de l'utilisation d'accéléromètres uniquement implique une absence de sensibilité à l'azimut, et, du mode de réalisation dans lequel le système est nécessairement entraîné par son propre poids) ou se déplace dans un milieu spécifique (par exemple un tube creux). Ce système nécessite en particulier, un capteur dédié ayant pour rôle de mesurer la distance totale parcourue, ce qui rend plus complexe la fabrication du système et un encombrement plus important.

De fait, ce système ne peut être utilisé que dans certains cas particuliers de trajectoire dans lesquels la distance parcourue peut être mesurée par un système externe simplement et avec précision. Il fonctionne plus difficilement lorsque l'objet se déplace suivant une trajectoire qui est plus complexe qu'un simple mouvement dans le sens de la gravité. Il en résulte que de tels systèmes sont très spécifiques à une application donnée et ne peuvent pas facilement être modifiés pour être transposés vers une autre utilisation. Une telle transposition demande alors une adaptation technique qui peut être compliquée à mettre en oeuvre.

L'invention vise à résoudre un ou plusieurs de ces inconvénients. L'invention porte ainsi sur un procédé tel que défini dans les revendications annexées.

L'invention concerne également un procédé pour détecter l'écart entre la trajectoire d'un objet mobile et une trajectoire de référence, comportant :

- l'acquisition d'une trajectoire de référence que doit suivre l'objet lors de son déplacement ;
- la détermination de la trajectoire suivie par l'objet lors de son déplacement ;
- la comparaison de la trajectoire déterminée par rapport à la trajectoire de référence ;
- l'émission d'un signal d'alerte si un écart supérieur à une valeur prédéterminée est détecté entre lesdites trajectoires déterminée et de référence, aucun signal d'alerte n'étant émis dans le cas contraire ;

et dans lequel la détermination de la trajectoire de l'objet est réalisée selon l'invention.

Selon un autre aspect, l'invention concerne un support d'enregistrement d'informations, comportant des instructions pour la mise en oeuvre de l'invention.

Selon un autre aspect, l'invention concerne un calculateur électronique pour la mise en oeuvre d'un procédé conforme à l'invention, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :

- la figure 1 illustre schématiquement un objet mobile dont on souhaite mesurer la trajectoire ;
- la figure 2 illustre schématiquement une unité de calcul de la trajectoire de l'objet de la figure 1 ;
- la figure 3 est un organigramme d'un procédé pour reconstruire la trajectoire de l'objet 1 ;
- les figures 4A et 4B illustrent schématiquement des étapes du déplacement de l'objet de la figure 1 au cours du temps ;
- la figures 5A et 5B illustrent schématiquement, le calcul d'une fonction de corrélation à partir des valeurs de grandeurs physiques mesurées en fonction du temps respectivement par deux capteurs de l'objet de la figure 1 lorsque cet objet se déplace ;
- la figure 6 illustre schématiquement une portion de la trajectoire de l'objet de la figure 1 reconstruite à partir des données des figures 5A et 5B;
- la figure 7 est un organigramme d'un procédé pour mesurer automatiquement l'écart de la trajectoire de l'objet de la figure 1 par rapport à une trajectoire prédéterminée ;

- la figure 8 illustre schématiquement un autre mode de réalisation de l'objet de la figure 1 ;
- la figure 9 illustre schématiquement, en fonction du temps, des valeurs de grandeurs physiques mesurées par des capteurs de l'objet de la figure 8, au cours du déplacement de cet objet ;
- la figure 10 illustre schématiquement une portion de la trajectoire de l'objet de la figure 8 reconstruite à partir des données de la figure.

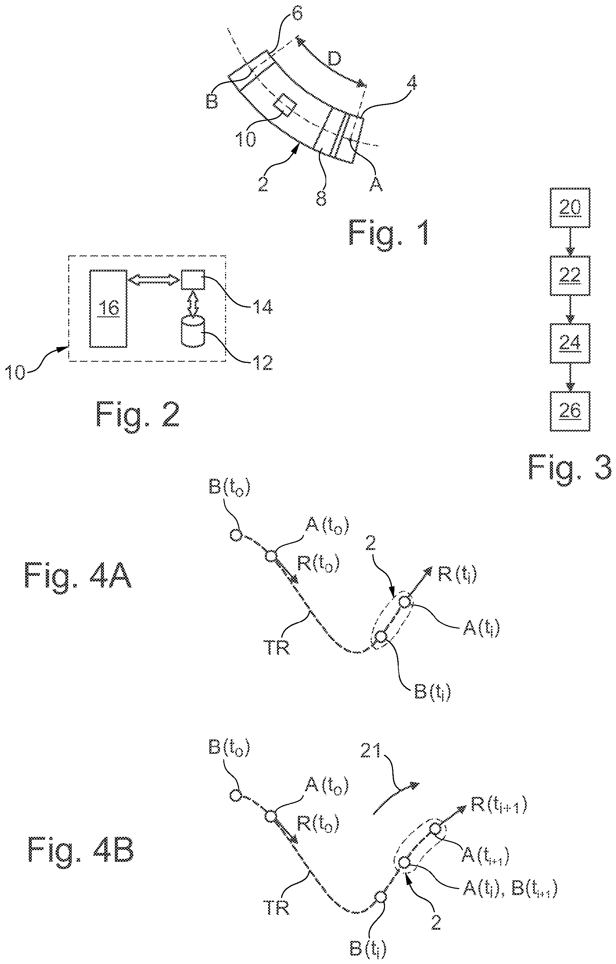

La figure 1 décrit un exemple d'un objet 2 mobile apte à se déplacer le long d'une trajectoire dans l'espace. L'objet 2 comporte :

- des premier 4 et second 6 capteurs,
- une centrale d'attitude 8,
- une unité 10 d'acquisition de données et de calcul de la trajectoire parcourue par l'objet 2. L'unité 10 peut être intégrée à l'objet 2 mais peut aussi être déportée de l'objet 2.

Les capteurs 4, 6 sont chacun aptes à mesurer N grandeurs physiques différentes, en des points différents de l'objet 2. Plus précisément, le capteur 4 est apte à mesurer N grandeurs physiques en un point A, le capteur 6 est apte à mesurer ces N mêmes grandeurs physiques en un autre point B de l'objet 2 distinct du point A. Dans ce qui suit, on assimilera les positions respectives des capteurs 4 et 6 à celles des points A et B.

Le nombre N de grandeurs physiques est un entier naturel non nul, de préférence supérieur ou égal à 2.

Les N grandeurs physiques sont choisies chacune de façon à ce que, dans la portion de l'espace dans lequel l'objet 2 se déplace ou est amené à se déplacer :

- au moins une de ces grandeurs physiques ne présente pas la même valeur en tous les points de cette portion de l'espace ;
- en chaque point de cette portion de l'espace, toutes ces grandeurs physiques présentent une valeur qui ne varie pas pendant le déplacement de l'objet entre les points A et B de plus de 1 % ou de 2 %.

Par exemple, les N grandeurs physiques sont choisies parmi le groupe composé de :

- l'accélération de la pesanteur, mesurée dans un repère prédéfini ;
- le champ magnétique, mesuré selon une direction prédéfinie ;
- le champ électromagnétique (par l'interpédiaire d'un récepteur électromagnétique) ;
- l'intensité lumineuse, mesurée pour des longueurs d'onde et des directions de propagation prédéfinies ;
- la température ;

- la pression atmosphérique ;
- un echo ou un temps de vol mesuré dans des directions différentes ;
- une image par exemple acquise par une caméra ou un capteur d'images ;
- le champ acoustique (par l'intermédiaire d'un microphone) ;
- le champ sismique (par l'intermédiaire d'un accéléromètre).

Les capteurs 4, 6 sont reliés mécaniquement entre eux de manière à maintenir entre eux une distance D constante, à 2 % près, lorsqu'ils sont déplacés le long d'une même trajectoire. Ainsi, le capteur 6 passe par tous les emplacements précédemment occupés par le capteur 4 lorsque l'objet 2 se déplace le long de la trajectoire. La distance est ici définie comme étant l'abscisse curviligne, mesurée le long de cette trajectoire, séparant l'un de l'autre les points de mesures A et B des capteurs 4 et 6.

L'objet 2 est par exemple un véhicule routier apte à se déplacer sur une surface. Les capteurs 4, 6 sont alignés le long d'un axe longitudinal central de ce véhicule, de telle sorte que les capteurs 4 et 6 suivent une même trajectoire sur la surface lorsque l'objet 2 se déplace.

La valeur de la distance D est avantageusement choisie pour respecter les conditions d'échantillonnage du théorème de Shannon, appliqué aux angles qui définissent la direction tangente à la trajectoire. En effet, on sait définir une direction tangente à une trajectoire en tout point de cette trajectoire. Dans un espace à trois dimensions, cette tangente est paramétrée par deux angles. Chacun de ces angles est une fonction prenant pour variable l'abscisse curviligne de la trajectoire. On parlera donc de « fonctions d'angle». Ici, la valeur de D est strictement inférieure à la quantité $1/(2*F)$ où F est la fréquence spatiale maximale de ces fonctions d'angle. Les fréquences spatiales de la trajectoire sont par exemples connues en calculant la transformée de Fourier des fonctions d'angle associées à cette trajectoire, en tout point de cette trajectoire.

Comme la trajectoire n'est généralement pas connue avant de mettre en oeuvre le procédé, la valeur de D peut être choisie en fonction de trajectoires typiques et/ou permises en fonction du contexte dans lequel l'objet 2 est utilisé. Par exemple, ici, l'objet 2 est amené à se déplacer sur une route ou sur le long d'un dispositif de guidage tel qu'un rail de chemin de fer ou le long d'un câble. L'homme du métier peut donc en déduire, avant même le déplacement, que la trajectoire effectivement suivie par l'objet 2 sera bornée par certaines limites. Par exemple, en fonctionnement normal, l'objet 2 ne s'éloigne normalement pas de la route ou du dispositif de guidage de plus d'une certaine distance limite prédéterminée. Un intervalle de valeurs de la distance D peut donc être déterminé en tenant compte de ces limites, sans que cela ne limite la fiabilité ou la versatilité du procédé.

La centrale 8 est apte à déterminer une direction tangente à la trajectoire en ce point de mesure. Par exemple, la centrale 8 mesure l'attitude de l'objet 2, dans un repère de l'espace tangent à la trajectoire, en un point de mesure. Par attitude, on entend l'orientation de l'objet 2 dans ce repère. Ce point de mesure est considéré comme confondu avec le point A ou B. En particulier, la centrale 8 permet de déterminer, à un instant donné, le repère de Serret-Frenet de l'objet en ce point de mesure. La centrale 8 détermine ainsi la tangente à la trajectoire de l'objet et donc les angles précédemment décrits qui paramétrisent cette tangente. La centrale 8 est par exemple une centrale d'attitude de type 3A3M3G, par exemple le module « LSM9DS0 » de la société STMicroelectronics.

Dans cet exemple, les grandeurs mesurées sont des accélérations selon trois axes de mesure placées orthogonalement les uns par rapport aux autres. On a donc N=3. Chacun des capteurs 4, 6 est donc un accéléromètre à trois axes de mesure. Les axes de mesure respectifs des capteurs 4, 6 sont orientés de la même façon.

La figure 2 représente l'unité 10. Cette unité 10 est ici configurée pour :

- acquérir et stocker les données de mesure des capteurs 4, 6 et de la centrale 8, et
- reconstruire automatiquement la trajectoire suivie par l'objet 2 au cours de son déplacement.

Cette unité 10 comporte donc :

- une interface 16 d'acquisition et d'échange de données ;
- un support 12 d'enregistrement d'informations ;
- un calculateur 14 électronique programmable ;

Le calculateur 14 exécute des instructions contenues sur le support 12. Ce support 12 contient notamment des instructions pour l'exécution du procédé selon les figures. L'interface 16 acquiert les données mesurées par les capteurs 4, 6 et par la centrale 8. Par exemple, l'interface 16 comporte un bus de communication, tel qu'un bus filaire (RS485 par exemple) ou sans fil (Bluetooth par exemple). Avantageusement, l'unité 10 comporte aussi un système de synchronisation des mesures des capteurs 4, 6 et de la centrale 8.

Un exemple générique de mise en oeuvre du procédé va d'abord être décrit en référence à la figure 3, pour déterminer la trajectoire, notée TR, suivie par l'objet 2 lors de son déplacement entre un instant initial $t_0$ et un instant final tf. La trajectoire TR que l'on cherche à obtenir est une fonction donnant la position de l'objet 2 dans un repère de l'espace pour chaque instant t compris entre $t_0$ et tf.

D'abord, lors d'une étape 20, l'objet 2 est mis en mouvement dans l'espace. Les capteurs 4, 6 étant solidaires de l'objet 2, ils sont donc eux aussi mis en mouvement dans l'espace. Pendant le déplacement de l'objet 2, les capteurs 4, 6 mesurent chacun les N grandeurs physiques et la centrale 8 mesure l'attitude de l'objet 2. Ces mesures sont réalisées en continu tout au long du déplacement, par exemple au rythme d'une mesure toutes les 5 ms. De préférence, ces mesures sont réalisées simultanément par les capteurs 4, 6 et la centrale 8. Les données mesurées par les capteurs 4, 6 et la centrale 8 sont par exemple ensuite enregistrées sur le support 12 par l'intermédiaire de l'interface 16.

Puis, lors d'une étape 22, on détermine des instants de référence, pour lesquels l'objet 2 a parcouru une distance cumulée $D_{tot}$ qui est égale à un multiple entier de la distance D précédemment définie comme distance entre les points A et B. La distance cumulée $D_{tot}$ est mesurée le long de la trajectoire parcourue TR depuis la position, dite position initiale, qu'occupait l'objet 2 à l'instant initial $t_0$. Dans cet exemple, la position initiale de l'objet 2 est celle occupée par le point A à l'instant initial. On considère ici que la distance $D_{tot}$ est nulle à l'instant initial. La distance $D_{tot}$ est par exemple l'abscisse curviligne du point A le long de la trajectoire TR avec pour origine la position initiale.

Les instants de référence $t_i$ estimés par le procédé sont définis de proche en proche à partir de l'instant $t_0$, où « i » est un indice entier non nul qui indexe de façon unique chaque instant de référence.

Les figures 4A et 4B illustrent respectivement la position de l'objet 2 à l'instant $t_{i-1}$ et à l'instant de référence suivant, noté $t_i$. Le point A à l'instant $t_i$ porte la référence $A(t_i)$. Une notation analogue est utilisée pour les autres instants et pour le point B.

Entre ces deux instants $t_{i-1}$ et $t_i$, on considère que l'objet 2 s'est déplacé d'une distance égale à la distance D, à 1% ou 2% ou 5% près. La flèche 21 représente le sens du déplacement de l'objet 2. Le point B occupe à l'instant $t_i$ la position qu'occupait le point A à l'instant $t_{i-1}$, ceci du fait que la distance entre les points A et B reste égale à la distance D. De fait, les grandeurs physiques mesurées par le capteur 6 à l'instant $t_i$ sont les mêmes que celles mesurées par le capteur 4 à l'instant $t_{i-1}$.

Ainsi, pour déterminer ces instants de référence $t_i$, on recherche donc, pour chacune des N grandeurs physiques mesurées, une corrélation entre les évolutions temporelles de cette grandeur physique mesurée respectivement par les capteurs 4 et 6.

Dans cet exemple, l'étape 22 est réalisée après que l'objet 2 ait terminé son déplacement, c'est-à-dire après l'instant tf.

Pour chaque instant de référence $t_{i-1}$ connu, l'instant de référence suivant $t_i$ est déterminé comme suit.

Pour chaque grandeur physique M parmi les N grandeurs physiques mesurées, on calcule la corrélation entre les mesures des capteurs 4 et 6. On restreint ce calcul aux valeurs mesurées pendant un intervalle temporel d'échantillonnage de durée T prédéfinie et qui prend son origine à l'instant $t_{i-1}$. La durée T est ici acquise automatiquement par l'unité 10 préalablement au début du procédé.

La valeur de T est par exemple supérieure ou égale à dix fois le délai entre deux mesures consécutives d'un capteur 4 ou 6. La valeur de T est en outre de préférence inférieure ou égale à 0,1 fois la durée totale du déplacement. Dans cet exemple, T est égale à 250 ms.

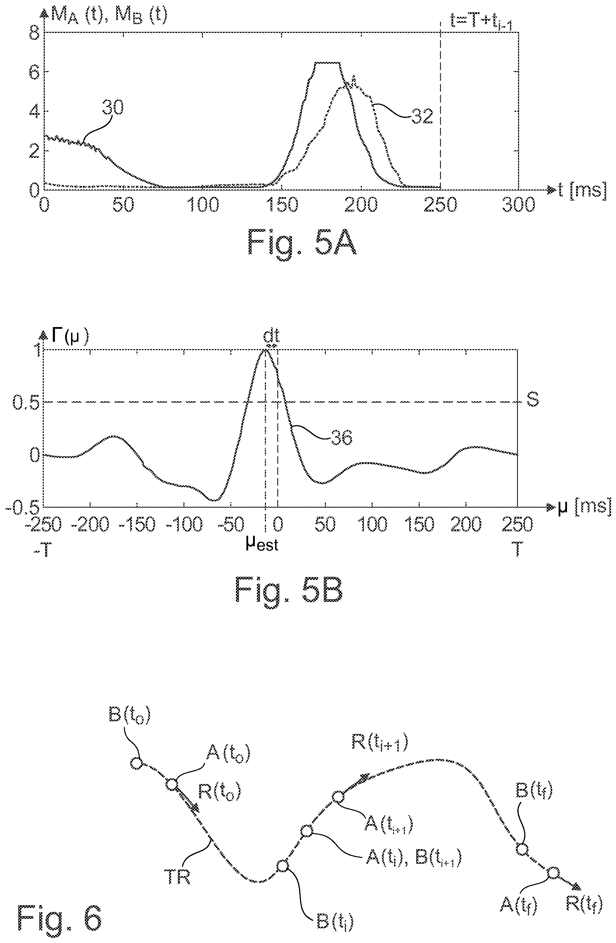

La figure 5A représente un exemple de l'évolution dans le temps des mesures des capteurs 4 et 6 pour une des N grandeurs physiques mesurées. Ces mesures sont respectivement notées $M_A(t)$ et $M_B(t)$ et correspondent aux courbes 30 et 32. Le temps t est représenté en abscisse (en ms). Pour simplifier, on prend sur cette figure pour origine des temps l'instant $t_{i-1}$. La valeur de M mesurée est représentée en ordonnée (ici exprimée en unités arbitraires dans un souci de simplification).

On peut calculer une corrélation $\Gamma$ au moyen de la fonction suivante :

$$\Gamma(\mu) = \int_{t \in [t_i; t_i + T]} M_A(t) M_B(t - \mu) dt$$

où $\mu$ appartient à l'intervalle [-T ; T]. La figure 5B illustre la corrélation $\Gamma$ (courbe 36) sur l'intervalle [-T ; T] ainsi calculée à partir des mesures de la grandeur M par les capteurs 4 et 6 illustrées à la figure 5A.

Ensuite, on détecte automatiquement l'instant estimé $\mu_{est}$ pour lequel la corrélation $\Gamma$ calculée présente un maximum sur l'intervalle [-T ; T]. On calcule ensuite la valeur d'un décalage temporel dt entre cet instant $\mu_{est}$ et l'origine $\mu_0=0$ de l'intervalle [-T ; T] Cette opération est réalisée à l'aide d'algorithmes de détection de maximum bien connus de l'homme du métier. Cette opération est répétée pour chacune des N-1 autres grandeurs physiques.

Enfin, on calcule le décalage moyen, noté $dt_{moy}$, des décalages dt calculés pour toutes les grandeurs physiques. L'instant de référence suivant $t_i$ est alors déterminé par la formule suivante : $t_i = t_{i-1} + dt_{moy}$.

Ces opérations sont répétées de façon itérative jusqu'à l'instant final tf. Ainsi, les instants de référence sont ainsi déterminés de proche en proche à partir de l'instant $t_0$.

Avantageusement, pour une grandeur M donnée, on ne calcule le décalage dt que si la valeur maximale de la fonction de corrélation $\Gamma$ sur l'intervalle [-T ; T] est supérieure ou égale à un seuil prédéterminé S. Si la fonction $\Gamma$ est inférieure à ce seuil S, alors on considère que les mesures $M_A(t)$ et $M_B(t)$ ne sont pas corrélées et on ne calcule pas le décalage dt correspondant.

Cela permet de ne pas tenir compte, dans le calcul du décalage moyen $dt_{moy}$, des grandeurs physiques pour lesquelles aucune corrélation n'a pu être détectée, ce qui fausserait le calcul de $t_i$.

Par exemple, on choisit la valeur du seuil S supérieure ou égale à 1,5 fois ou à 2 fois la valeur moyenne de la fonction $\Gamma$ sur l'intervalle [-T ; T]. Ainsi, on dispose d'un nombre K d'écarts dt, chacun calculé pour une grandeur M différente, où le nombre K est une constante inférieure ou égale à N. Le décalage moyen $dt_{moy}$ n'est alors calculé que sur ces K valeurs et ne tient pas compte des N-K valeurs pour lesquelles il n'y a pas de corrélation entre les mesures $M_A(t)$ et $M_B(t)$. Ici, on choisit comme valeur de seuil S = 0,5.

A l'issue de l'étape 22, on dispose donc d'une liste de tous les instants de référence $t_i$ depuis le début (instant $t_0$) du déplacement de l'objet 2.

Puis, lors d'une étape 24, on détermine pour chacun de ces instants $t_i$ un vecteur $R(t_i)$ (figure 4A) de l'espace qui est tangent à la trajectoire TR au point A de l'objet 2 à cet instant $t_i$. Ce vecteur $R(t_i)$ est par exemple un vecteur directeur de la tangente dont les coordonnées sont exprimées dans un repère fixe de l'espace dans lequel l'objet 2 se déplace.

Ce vecteur $R(t_i)$ est ici déterminé en calculant le repère de Serret-Frenet au point A de l'objet 2 à cet instant $t_i$, grâce à la centrale 8. De façon connue, les données mesurées par la centrale 8 permettent de construire directement un tel repère. A partir de ce repère, on obtient directement le vecteur $R(t_i)$, car il est l'un des constituants de ce repère. Par exemple, pour ce faire, on extrait du support 12 les valeurs des données d'attitude mesurées par la centrale 8 pour cet instant $t_i$.

On dispose ainsi d'une liste de vecteurs $R(t_i)$ pour chacun des instants de référence $t_i$.

En outre, à chacun de ces instants $t_i$ correspond une valeur particulière de la distance cumulée $D_{tot}$ parcourue à cet instant. Du fait de la définition même des instants de référence, cette distance cumulée s'exprime comme suit : $D_{tot}(t_i) = D*i$.

Enfin, lors d'une étape 26, la trajectoire TR de l'objet 2 est reconstruite à partir des couples de valeurs $D_{tot}(t_i)$, $R(t_i)$ précédemment calculés pour les instants $t_i$.

Pour ce faire, on utilise par exemple une méthode d'interpolation linéaire sphérique (SLERP, pour « spherical linear interpolation » en langue anglaise), ou une méthode d'interpolation par des splines cubiques sur une sphère. Par exemple, on utilise une des méthodes décrites dans les thèses de doctorat de Nathalie Sprynski, « Reconstruction de courbes et surfaces à partir de données tangentielles », Université Joseph Fourier, Grenoble, France, 2007 et de Mathieu Huard « Modélisation géométrique et reconstruction de formes équipées de capteurs d'orientation », Université Joseph Fourier, Grenoble, France, 2013.

On obtient alors la trajectoire TR pour tous les instants entre $t_0$ et $t_f$, comme illustré par la figure 6. Sur cette figure, pour simplifier, les points A et B ne sont illustrés que pour les instants $t_0$, $t_i$, $t_{i+1}$ et tf. En variante, on peut reconstruire la trajectoire à partir non plus des seuls vecteurs $R(t_i)$ mais à l'aide du repère complet de Serret-Frenet qui est déterminé par la centrale 8 pour chaque instant $t_i$. La reconstruction est ensuite réalisée à partir de ces informations selon la méthode décrite dans la thèse de Mathieu Huard précédemment citée. Ainsi, on obtient une plus grande précision et une meilleure stabilité de la reconstruction de la trajectoire.

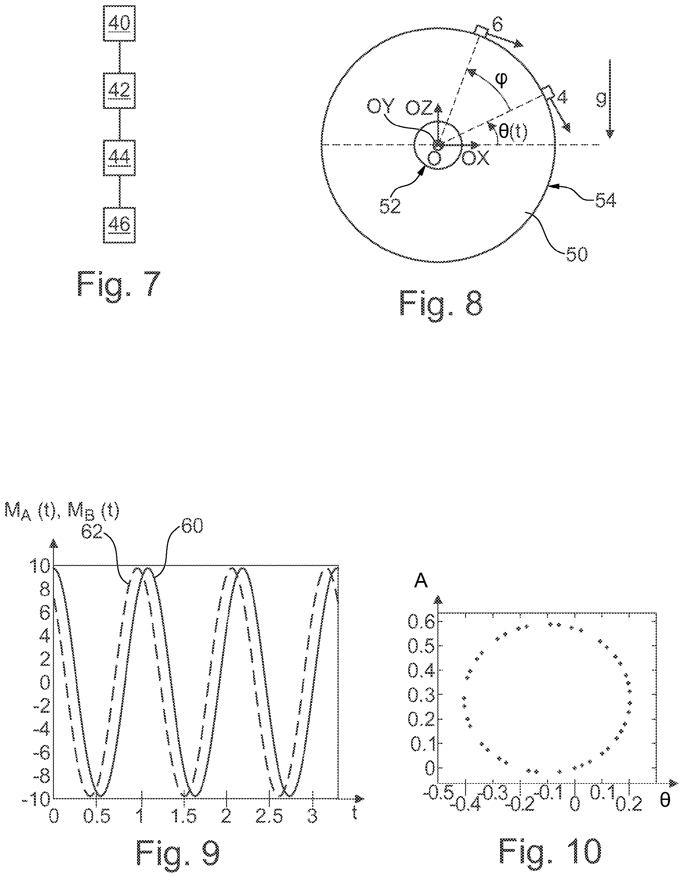

La figure 7 représente schématiquement un exemple d'un procédé de surveillance de l'objet 2 pour détecter un écart entre sa trajectoire et une trajectoire de référence prédéfinie. Ce procédé est avantageusement mis en oeuvre par l'unité 10.

Lors d'une étape 40, une trajectoire de référence est acquise automatiquement. Cette trajectoire de référence est une trajectoire prédéfinie de consigne que l'objet 2 est supposé suivre lors de son déplacement. Par exemple, cette trajectoire de référence a préalablement été déterminée par application du procédé de la figure 3.

Puis, lors d'une étape 42, l'objet 2 est mis en mouvement et sa trajectoire est déterminée au fur et à mesure du déplacement, en appliquant les étapes 20 à 26 précédemment décrites.

Lors d'une étape 44, on mesure un écart entre la trajectoire déterminée et la trajectoire de référence. L'étape 44 est ici répétée au cours du déplacement, par exemple au fur et à mesure de la détermination de la trajectoire lors de l'étape 42. Par exemple, on définit une zone dite « zone de sécurité » qui s'étend radialement autour de la trajectoire de référence avec une distance prédéfinie. Par exemple, la zone de sécurité est un cylindre de rayon prédéfini (ce rayon correspond au seuil de sécurité), l'axe principal du cylindre étant la trajectoire de référence. La trajectoire déterminée est dite s'écarter de la trajectoire de référence si elle sort à l'extérieur de la zone de sécurité.

Si la trajectoire déterminée s'écarte de la trajectoire prédéterminée, alors un signal d'alarme est émis lors d'une étape 46 par l'unité 10, ce signal d'alarme n'étant pas émis si cet écart est inférieur ou égal à la valeur prédéterminée.

Un exemple particulier de mise en oeuvre de ce procédé va maintenant être décrit, en référence aux figures 8 à 10, pour acquérir la trajectoire suivie par la périphérie d'une roue.

La figure 8 décrit une roue 50, comportant un moyeu 52 et une périphérie 54 circulaires centrées sur un centre O. La roue 50 est par exemple une roue de vélo montée en rotation sur une armature fixe. Dans cet exemple, l'objet 2 dont on souhaite déterminer la trajectoire est constitué de 4 et 6 et est fixée en périphérie 54 de la roue 30. Le but est ici de détecter une éventuelle déformation de la trajectoire de la roue 50 lors de son fonctionnement qui serait du, par exemple, à une anomalie de la rotation (par exemple dû à l'usure du moyeu et/ou du support de l'armature fixe).

Les capteurs 4, 6 sont placés en des points distincts de la périphérie 54 et sont séparés de la distance curviligne D=20cm, mesurée le long de la trajectoire. La roue 50 présente ici un rayon R égal à 30cm.

On définit un repère orthonormé OXYZ de l'espace centré au point O et comportant des axes OX, OY et OZ. Les axes OX, OZ s'étendent dans le plan de la roue 50. L'axe OZ est ici parallèle et de sens opposé à la direction du champ de gravitation terrestre, noté g. L'axe OX s'étend horizontalement.

La roue 50 tourne autour de l'axe OY, perpendiculaire aux axes OX et OZ. Dans cet exemple, la roue 50 tourne avec une vitesse angulaire constante ω=0,91 tour/s soit environ 5,73 rad/s. Cependant, dans le cas général, il n'est pas nécessaire que cette vitesse soit constante.

Dans cet exemple, les capteurs 4, 6 comportent chacun un accéléromètre mono-axial dont la direction de mesure est tangente à la périphérie 54 au point de mesure de ce capteur. Par exemple, ces accéléromètres sont les accéléromètres MS9002 de la société Safran-Colibrys (France). Les données mesurées par ces accéléromètres sont transmises vers l'unité 10 (non représentée) pour y être enregistrées. On note $\theta(t)=\omega^*t$ l'angle entre l'axe OX et la droite reliant le centre O au point de mesure du capteur 4, et $\varphi$ l'angle entre les droites reliant le centre O aux points de mesure des capteurs, respectivement, 4 et 6. Cet angle $\varphi$ est ici égal à environ 0,67 rad.

Ainsi, les capteurs 4 et 6 mesurent chacun une seule grandeur physique, qui est la projection de la composante de l'accélération de la pesanteur selon la direction de mesure de ce capteur additionnée de son accélération propre dans le repère OXYZ. On a ainsi : $M_A(t) = g^*\cos(\omega^*t)$ et $M_B(t) = g^*\cos(\omega^*t + \varphi)$, où $g=9,81m/s^2$.

Ici, du fait de la configuration des capteurs 4, 6 et notamment des directions de mesure, l'information d'attitude de l'objet 2 est obtenue à partir des capteurs 4 et 6. Le capteur 4 joue donc le rôle de la centrale 8 et donc il n'y a pas lieu d'utiliser une centrale 8 distincte.

La figure 9 illustre l'évolution des grandeurs mesurées $M_A(t)$ (courbe 60) et $M_B(t)$ (courbe 62) respectivement par les capteurs 4, 6, pendant une durée de mesure de 5 secondes. Sur cette figure, l'abscisse exprime la durée (en secondes), l'ordonnée exprime la valeur d'accélération mesurée par chaque capteur (en $m/s^2$).

Le procédé de la figure 7 et en particulier les étapes 20 à 26 sont ainsi mis en oeuvre pour déterminer la trajectoire de la roue dans le repère OXYZ et, plus précisément, celle du point de mesure A du capteur 4 et pour surveiller un écart par rapport à une trajectoire de référence. On souhaite ainsi déterminer l'évolution de l'angle $\theta$ en fonction de la distance curviligne parcourue par le point A lorsque la roue tourne. Dans le cas de la roue 50, la trajectoire de référence correspond à un cercle de centre O et de rayon R. De fait, la fréquence spatiale F de cette trajectoire est ici donnée par la formule $F = 1/(2^*\pi^*R)$. Avec les dimensions choisies pour la roue 50, F est égale à $0,53m^{-1}$. La condition de Shannon précédemment énoncée se traduit par la condition D < 94.2cm et est donc ici satisfaite puisque D vaut ici 20 cm.

Les opérations de l'étape 22 permettent de déterminer les instants de référence à partir des données de la figure 9. Dans cet exemple, on choisit une durée T égale à 1s. On choisit comme instant initial $t_0=0$ avec $A(t=0)=A_0$ la position initiale du capteur 4. Les recherches de corrélation permettent de calculer l'instant $t_{i=1} = t_0+dt$

où dt=0,116 secondes. Dans cet exemple, compte tenu de la géométrie de la roue 50 et de la disposition des capteurs 4 et 6, cette valeur du décalage était prédictible à partir du déphasage $\varphi/\omega$. On en déduit donc qu'entre les instants $t_0$ et $t_1$, le point A s'est déplacé d'une distance égale à D=20cm. Il en va de même pour les instants suivants.

Une fois que tous les instants de référence ont pu être déterminés, la trajectoire est reconstruite à partir, pour chaque instant de référence, des valeurs d'abscisse curviligne (c'est-à-dire la distance $D_{tot}$ cumulée parcourue par le point A depuis $t_0$) et de tangente (obtenues ici directement à partir de la mesure du capteur 4).

La figure 10 illustre la portion de la trajectoire du point A reconstruite à partir des données de la figure 9 à l'issue du procédé. L'axe des ordonnées indique l'évolution de l'angle $\theta$, l'axe des abscisses indique la distance curviligne parcourue par le point A lorsque la roue tourne.

Ainsi, il est possible de détecter un écart de la trajectoire parcourue par rapport à la trajectoire de référence de la roue 50.

En variante, dans le cas où l'on dispose d'une référence sur la trajectoire, la détection d'un écart peut se faire directement sur les angles reconstruits avec la centrale 8. En effet, la connaissance d'une trajectoire de référence permet d'en déduire les angles de référence en fonction de l'abscisse curviligne. Ces derniers sont utilisés par calculer un écart avec les angles reconstruits via ce procédé.

L'objet 2 peut être différent. Par exemple, il peut s'agir d'un véhicule routier ou ferroviaire, d'une sonde d'inspection, d'une pièce mécanique mobile. Par exemple, les capteurs 4 et 6 sont reliés mécaniquement pour présenter la même attitude pour une même abscisse curviligne sur la trajectoire.

Par exemple, le procédé peut être utilisé dans le domaine de l'exploitation et de la prospection pétrolière, pour déterminer la trajectoire d'une conduite ou d'un flexible. L'objet 2 est alors solidaire de cette conduite. Par exemple, la fréquence spatiale F est de l'ordre de 1Hz ou de 10Hz. Dans un autre exemple, le procédé peut être utilisé dans un manège de type « grande roue » (pour suivre la bonne rotation du manège), ou de type « montagnes russes », pour suivre la trajectoire de wagons circulant sur un ou des rails de ce manège. L'objet 2 est par exemple une paire de wagons attelés entre eux. On cherche par exemple à vérifier que ces deux wagons suivent bien la même trajectoire. Dans ce cas, la fréquence F dépend notamment du diamètre des boucles (ou « loopings » en langue anglaise) que présente le ou les rails du manège. Par exemple, ce diamètre est compris entre 5m et 50m. Ici la fréquence spatiale est F = 1 / (pi * Diamètre) donc F = 0.0637 $m^{-1}$ si D = 5 m et F = 0.00637 $m^{-1}$ si D = 50 m.

Dans un autre exemple, le procédé peut être utilisé dans un transport par câble de type « téléphérique », « télésiège » ou « télécabine » pour suivre l'évolution dans le temps de la déformée (forme) du câble porteur. L'information de l'évolution de la déformée de ce câble est intéressante pour la surveillance de son état de santé (résultat classique de surveillance des structrures).

La trajectoire de référence peut donc avoir été déterminée différemment. Elle dépend notamment de la nature de l'objet 2 et du contexte dans lequel il est amené à évoluer lors de son déplacement. Par exemple, si l'objet 2 est un véhicule guidé par un rail, alors la trajectoire de référence est celle de ce rail.

L'étape 44 peut être omise. Dans ce cas, la trajectoire de référence peut être acquise uniquement pour déterminer la valeur de D, à partir des conditions de Shannon appliquées à la trajectoire de référence.

La reconstruction de la trajectoire peut être réalisée en temps réel au fur et à mesure du déplacement de l'objet 2. Dans ce cas, les instants $t_i$ sont calculés au cours du déplacement. La trajectoire TR est alors construite par incrémentations successives au fur et à mesure que les instants $t_i$ sont calculés. Les étapes 22 à 26 sont donc réalisées en alternance et de façon incrémentale jusqu'à la fin du déplacement. L'ordre des étapes du procédé de la figure 7 est alors modifié, notamment pour mesurer un écart de la trajectoire déterminée par rapport à la trajectoire de référence au fur et à mesure que la trajectoire déterminée est construite pas à pas.

La centrale 8 peut ne mesurer l'attitude de l'objet 2 que lorsqu'un instant de référence a été déterminé.

La corrélation peut être calculée différemment. D'autres fonctions peuvent être utilisées pour calculer la corrélation $\Gamma$.

L'unité 10 peut être réalisée différemment. En particulier, l'interface 16 peut être différente (liaison série, USB, sans-fil, etc). L'unité 10 peut être déportée de l'objet 2. Par exemple, elle se situe à distance de cet objet 2 et recueille les données mesurées par les capteurs à distance au moyen de l'interface 16.

Dans le cas où N = 1, c'est-à-dire lorsque chaque capteur ne mesure qu'une seule grandeur physique, alors le calcul du décalage moyen $dt_{moy}$ est omis. A la place, on calcule un unique décalage temporel dt pour cette seule grandeur physique, et l'instant de référence suivant $t_i$ est donné par la formule suivante : $t_i = t_{i-1} + dt$.

Les valeurs de la durée T peuvent être différentes. Par exemple, on définit une valeur particulière de la durée T pour chacune des N grandeurs physiques. Il en va de même pour le seuil S.

En variante, l'étape 24 de recherche de corrélations est réalisée différemment. Par exemple, la valeur du décalage dt peut être calculée au moyen d'un filtre de Kalman, de façon à prendre en compte les valeurs des décalages dt calculés pour les instants de référence précédents, ce qui permet d'affiner la précision de la mesure et d'éviter des variations abruptes dans le temps.

On peut également compléter la recherche de corrélations au moyen d'une base d'ondelettes, ce qui est particulièrement avantageux lorsque les signaux mesurés par les capteurs 4, 6 ont une échelle temporelle différente (par exemple suite à une mauvaise calibration).

## Revendications

1. Procédé pour déterminer la trajectoire d'un objet mobile, **caractérisé en ce qu'**il comporte :

   - la fourniture d'un objet (2) mobile comportant des premier (4) et second capteurs (6) reliés mécaniquement entre eux et configurés pour mesurer au moins une même grandeur physique en des points différents dudit objet,
   - le déplacement (20) desdits premier et deuxième capteurs le long d'une même trajectoire (TR), lesdits premier et second capteurs conservant une distance D l'un par rapport à l'autre constante, à 2 % près, au cours du déplacement, la distance D étant définie comme étant l'abscisse curviligne séparant lesdits premier et second capteurs, mesurée le long de ladite trajectoire ;
   - la mesure, au cours du déplacement, de ladite au moins une même grandeur physique par lesdits premier et second capteurs, ladite grandeur physique étant choisie dans le groupe comprenant une intensité lumineuse, un champ magnétique, l'accélération de la pesanteur, le champ électromagnétique, une température, une pression atmosphérique, un temps de vol, une image, un champ acoustique, un champ sismique ou une accélération ;
   - la détermination (22) des instants, dits instants de référence (t), pour lesquels l'objet mobile a parcouru, le long de ladite trajectoire, une distance curviligne cumulée qui est égale à un multiple entier de la distance D, cette détermination comportant, pour ladite au moins une même grandeur physique mesurée, la recherche d'une corrélation entre l'évolution temporelle de cette grandeur physique mesurée respectivement par chacun desdits premier et second capteurs ;
   - le calcul (24) d'une direction tangente à la trajectoire de l'objet, au niveau d'un même capteur parmi lesdits premier ou second capteurs, pour chacun des instants t déterminés ;
   - la reconstitution automatique (26) de la trajectoire suivie par l'objet mobile lors de son déplacement au moyen d'une interpolation, à partir, pour chaque instant de référence déterminé :

     • de la distance curviligne cumulée à cet instant de référence le long de la trajectoire, et
     • de ladite tangente calculée pour cet instant de référence.

2. Procédé selon la revendication 1, dans lequel la détermination des instants de référence est réalisée de proche en proche pour des instants successifs et comporte la détermination d'un instant $t_i$ à partir d'un instant $t_{i-1}$ connu, les instants $t_i$ et $t_{i-1}$ désignant deux instants de référence successifs, l'indice i étant un entier naturel, cette détermination comportant, pour ladite au moins une grandeur physique :

   - le calcul automatique d'une corrélation entre les valeurs de ladite au moins une grandeur physique mesurée au cours du temps par chacun des premier et second capteurs, sur un intervalle temporel d'échantillonnage prenant son origine à l'instant $t_{i-1}$ et présentant une durée T ;
   - le calcul automatique d'un décalage temporel dt entre, d'une part, l'instant pour lequel la fonction de corrélation présente un maximum sur l'intervalle [-T, T] et, d'autre part, l'origine de l'intervalle [-T, T] ;
   - puis, le calcul de la valeur de l'instant $t_i$ déterminée au moyen de la formule $t_i = t_{i-1} + dt$.

3. Procédé selon la revendication 2, dans lequel :

   - les premier (4) et second (6) capteurs sont configurés pour mesurer N grandeurs physiques, N étant un entier supérieur à deux ;
   - la détermination des instants de référence comporte :

     - pour chacune des N grandeurs physiques, le calcul automatique de ladite fonction de corrélation et le calcul automatique dudit décalage temporel dt à partir de ladite fonction de corrélation respective,
     - puis, le calcul du décalage moyen $dt_{moy}$ défini comme la moyenne des décalages temporels dt calculés, la valeur de l'instant $t_i$ déterminée étant donnée par la formule $t_i = t_{i-1} + dt_{moy}$.

4. Procédé selon la revendication 3, dans lequel :

   - pour chacune des N grandeurs physiques, le décalage dt est calculé uniquement si la valeur de la fonction de corrélation calculée est supérieure à un seuil prédéfini, et n'est pas calculé sinon ;
   - la moyenne des décalages temporels est réalisée à partir des seuls décalages dt calculés.

5. Procédé selon l'une quelconque des revendications précédentes, dans lequel la mesure de ladite direction tangente est réalisée au moyen d'une centrale d'attitude (8) appartenant audit objet.

6. Procédé selon l'une quelconque des revendications précédentes, dans lequel la grandeur physique est une grandeur reflétant la position dudit capteur par rapport à un repère prédéfini de l'espace, telle qu'un angle d'inclinaison ou de rotation.

7. Procédé selon l'une quelconque des revendications précédentes, comportant le calcul, pour chacun des instants t déterminés, du repère de Serret-Frenet associé à la direction tangente calculée, et dans lequel la reconstruction automatique de la trajectoire est en outre interpolée à partir dudit repère.

8. Procédé selon l'une quelconque des revendications précédentes, dans lequel l'objet (2) mobile se déplace sur une surface.

9. Procédé selon l'une quelconque des revendications précédentes, dans lequel les premier (4) et second (6) capteurs sont reliés mécaniquement pour présenter la même attitude pour une même abscisse curviligne sur la trajectoire.

10. Procédé pour détecter l'écart entre la trajectoire d'un objet mobile et une trajectoire de référence, comportant :

   - l'acquisition (40) d'une trajectoire de référence que doit suivre l'objet lors de son déplacement ;
   - la détermination (42) de la trajectoire suivie par l'objet lors de son déplacement ;
   - la comparaison (44) de la trajectoire déterminée par rapport à la trajectoire de référence ;
   - l'émission (46) d'un signal d'alerte si un écart supérieur à une valeur prédéterminée est détecté entre lesdites trajectoires déterminée et de référence, aucun signal d'alerte n'étant émis dans le cas contraire ;

ce procédé étant **caractérisé en ce que** la détermination de la trajectoire de l'objet est réalisée selon l'une quelconque des revendications précédentes.

11. Procédé selon la revendication 10, dans lequel la distance D est strictement inférieure à 2*F, où F est la fréquence spatiale des fonctions d'angle qui définissent la tangente à la trajectoire de référence.

12. Support d'enregistrement d'informations (12), **caractérisé en ce qu'**il comporte des instructions pour la mise en oeuvre, sur un calculateur électronique, d'un procédé d'évaluation des données fournies par un objet mobile comportant deux capteurs reliés mécaniquement avec une distance constante entre eux, conformément à un procédé selon l'une quelconque des revendications précédentes.

13. Calculateur électronique (10) pour la mise en oeuvre d'un procédé d'évaluation des données fournies par un objet mobile comportant deux capteurs, conformément à un procédé selon l'une quelconque des revendications 1 à 11, **caractérisé en ce qu'**il est programmé pour :

   - déterminer des instants, dits instants de référence (t), pour lesquels un objet (2) mobile comportant des premier (4) et second capteurs (6) :

      • reliés mécaniquement entre eux,
      • configurés pour mesurer au moins une même grandeur physique en des points différents dudit objet et
      • conservant une distance D l'un par rapport à l'autre constante, à 2 % près, au cours du déplacement, la distance D étant définie comme étant l'abscisse curviligne séparant lesdits capteurs,

   a parcouru, le long de ladite trajectoire, une distance curviligne cumulée qui est égale à un multiple entier de la distance D, cette détermination comportant, pour ladite au moins une même grandeur physique mesurée, la recherche d'une corrélation entre l'évolution temporelle de cette grandeur physique mesurée respectivement par chacun desdits premier et second capteurs ;
   - calculer une direction tangente à la trajectoire de l'objet, au niveau d'un même capteur parmi lesdits premier ou second capteurs, pour chacun des instants t déterminés ;
   - reconstituer automatiquement (26) la trajectoire suivie par l'objet mobile lors de son déplacement au moyen d'une interpolation, à partir, pour chaque instant de référence déterminé :

      • de la distance curviligne cumulée à cet instant de référence le long de la trajectoire, et
      • de ladite tangente calculée pour cet instant de référence.

## Patentansprüche

1. Verfahren zur Bestimmung der Bewegungsbahn eines beweglichen Objekts, **dadurch gekennzeichnet, dass** es umfasst:

   - die Bereitstellung eines beweglichen Objekts (2), umfassend erste (4) und zweite Sensoren (6), die mechanisch miteinander verbunden und eingerichtet sind, um mindestens eine selbe physikalische Größe an verschiedenen Punkten des Objekts zu messen,
   - die Verlagerung (20) der ersten und zweiten Sensoren entlang einer selben Bewegungsbahn (TR), wobei die ersten und zweiten Sensoren zueinander ein konstante Distanz D bis auf 2 % während der Verlagerung bewahren, wobei die Distanz D als die gekrümmte Abszisse, die die ersten und zweiten Sensoren trennt, gemessen entlang der Bewegungsbahn, definiert ist;

- während der Verlagerung das Messen der mindestens einen selben physikalischen Größe durch die ersten und zweiten Sensoren, wobei die physikalische Größe in der Gruppe ausgewählt ist, umfassend eine Lichtstärke, ein Magnetfeld, die Beschleunigung der Schwerkraft, das elektromagnetische Feld, eine Temperatur, einen Luftdruck, eine Flugzeit, ein Bild, ein akustisches Feld, ein seismisches Feld oder eine Beschleunigung;

- die Bestimmung (22) von Zeitpunkten, Referenzzeitpunkte (t) genannt, zu denen das bewegliche Objekt entlang der Bewegungsbahn eine kumulierte gekrümmte Distanz durchlaufen hat, die gleich einem ganzen Vielfachen der Distanz D ist, wobei diese Bestimmung für die mindestens eine selbe gemessene physikalische Größe die Suche nach einer Korrelation zwischen der zeitlichen Entwicklung dieser physikalischen Größe, die von jedem der ersten bzw. zweiten Sensoren gemessen wird, umfasst;

- die Berechnung (24) einer die Bewegungsbahn des Objekts tangierenden Richtung im Bereich eines selben Sensors unter den ersten oder zweiten Sensoren für jeden der bestimmten Zeitpunkte t;

- die automatische Wiederherstellung (26) der von dem beweglichen Objekt bei seiner Verlagerung verfolgten Bewegungsbahn mit Hilfe einer Interpolation, für jeden bestimmten Referenzzeitpunkt, auf Basis von:

• der kumulierten gekrümmten Distanz zu diesem Referenzzeitpunkt entlang der Bewegungsbahn, und
• der für diesen Referenzzeitpunkt berechneten Tangente.

2. Verfahren nach Anspruch 1, bei dem die Bestimmung der Referenzzeitpunkte nach und nach für aufeinanderfolgende Zeitpunkte erfolgt und die Bestimmung eines Zeitpunkts $t_i$ auf Basis eines bekannten Zeitpunkts $t_{i-1}$ umfasst, wobei die Zeitpunkte $t_i$ und $t_{i-1}$ zwei aufeinanderfolgende Referenzzeitpunkte bezeichnen, wobei der Index i eine natürliche ganze Zahl ist, wobei diese Bestimmung für die mindestens eine physikalische Größe umfasst:

- die automatische Berechnung einer Korrelation zwischen den Werten der mindestens einen physikalischen Größe, die von jedem der ersten und zweiten Sensoren mit der Zeit gemessen wird, über ein Probenahmezeitintervall, das zum Zeitpunkt ti-i beginnt und eine Dauer T aufweist;

- die automatische Berechnung einer Zeitverschiebung dt zwischen einerseits dem Zeitpunkt, zu dem die Korrelationsfunktion ein Maximum in dem Intervall [-T, T] aufweist, und andererseits dem Ursprung des Intervalls [-T, T);

- dann die Berechnung des Werts des Zeitpunkts $t_i$, bestimmt mit Hilfe der Formel $t_i = t_{i-1} + dt$.

3. Verfahren nach Anspruch 2, bei dem:

- die ersten (4) und zweiten Sensoren (6) eingerichtet sind, um N physikalische Größen zu messen, wobei N eine ganze Zahl größer als zwei ist;
- die Bestimmung der Referenzzeitpunkte umfasst:
- für jede der N physikalischen Größen die automatische Berechnung der Korrelationsfunktion und die automatische Berechnung der Zeitverschiebungen dt auf Basis der jeweiligen Korrelationsfunktion,
- dann die Berechnung der durchschnittlichen Verschiebung $dt_{moy}$, der als der Durchschnitt der berechneten Zeitverschiebungen dt definiert ist, wobei der bestimmte Wert des Zeitpunkts $t_i$ durch die Formel $t_i = t_{i-1} + dt_{moy}$ gegeben ist.

4. Verfahren nach Anspruch 3, bei dem:

- für jede der N physikalischen Größen der Verschiebung dt nur berechnet wird, wenn der Wert der berechneten Korrelationsfunktion größer als eine vordefinierte Schwelle ist, und andernfalls nicht berechnet wird;
- der Durchschnitt der Zeitverschiebungen nur aus den berechneten Verschiebungen dt erstellt wird.

5. Verfahren nach einem der vorhergehenden Ansprüche, bei dem die Messung der Tangentialrichtung mit Hilfe einer Lagesteuerungsbaugruppe (8), die dem Objekt angehört, erfolgt.

6. Verfahren nach einem der vorhergehenden Ansprüche, bei dem die physikalische Größe eine Größe ist, die die Position des Sensors in Bezug zu einem vordefinierten Bezugspunkt im Raum, wie einem Neigungs- oder Rotationswinkel, wiederspiegelt.

7. Verfahren nach einem der vorhergehenden Ansprüche, umfassend für jeden der bestimmten Zeitpunkte t die Berechnung des Serret-Frenet-Bezugspunktes, der der berechneten Tangentialrichtung zugeordnet ist, und bei dem die automatische Wiederherstellung der Bewegungsbahn ferner auf Basis des Bezugspunktes interpoliert wird.

8. Verfahren nach einem der vorhergehenden Ansprüche, bei dem sich das bewegliche Objekt (2) auf einer Oberfläche verlagert.

9. Verfahren nach einem der vorhergehenden Ansprüche, bei dem die ersten (4) und zweiten (6) Sensoren mechanisch verbunden sind, um dieselbe Lage für eine selbe gekrümmte Abszisse auf der Bewegungsbahn aufzuweisen.

10. Verfahren zur Erfassung einer Abweichung zwischen der Bewegungsbahn eines beweglichen Objekts und einer Referenzbahn, umfassend:

    - die Erfassung (40) einer Referenzbahn, der das Objekt bei seiner Verlagerung folgen soll;
    - die Bestimmung (42) der Bewegungsbahn, die von dem Objekt bei seiner Verlagerung verfolgt wird;
    - den Vergleich (44) der bestimmten Bewegungsbahn mit der Referenzbahn;
    - das Senden (46) eines Warnsignals, wenn eine Abweichung größer als ein vorbestimmter Wert zwischen der bestimmten Bewegungsbahn und der Referenzbahn erfasst wird, wobei im umgekehrten Fall kein Warnsignal gesandt wird; wobei dieses Verfahren **dadurch gekennzeichnet ist, dass** die Bestimmung der Bewegungsbahn des Objekts nach einem der vorhergehenden Ansprüche erfolgt.

11. Verfahren nach Anspruch 10, bei dem die Distanz D unbedingt geringer als 2*F ist, wobei F die Raumfrequenz der Winkelfunktionen ist, die die Tangente an die Referenzbahn definierten.

12. Aufzeichnungsträger von Informationen (12), **dadurch gekennzeichnet, dass** er Anweisungen für den Einsatz eines Verfahrens zur Bewertung der Daten, die von einem beweglichen Objekt, umfassend zwei Sensoren, die mit einer konstanten Distanz zwischen ihnen mechanisch verbunden sind, geliefert werden, auf einem elektronischen Rechner umfasst, gemäß einem Verfahren nach einem der vorhergehenden Ansprüche.

13. Elektronischer Rechner (10) für den Einsatz eines Verfahrens zur Bewertung der Daten, die von einem beweglichen Objekt, umfassend zwei Sensoren, geliefert werden, gemäß einem Verfahren nach einem der Ansprüche 1 bis 11, **dadurch gekennzeichnet, dass** er programmiert ist, um:

    - Zeitpunkte, Referenzzeitpunkte (t) genannt, zu bestimmen, zu denen ein bewegliches Objekt (2), umfassend erste (4) und zweite Sensoren (6):

    • die mechanisch miteinander verbunden sind,
    • die eingerichtet sind, um mindestens eine selbe physikalische Größe an unterschiedlichen Punkten des Objekts zu messen, und
    • die eine konstante Distanz D zueinander bis auf 2 % während der Verlagerung bewahren, wobei die Distanz D als die gekrümmte Abszisse, die die Sensoren trennt, definiert ist,

eine kumulierte gekrümmte Distanz, die gleich einem ganzen Vielfachen der Distanz D ist, entlang der Bewegungsbahn durchlaufen hat, wobei diese Bestimmung für die mindestens eine selbe gemessene physikalische Größe die Suche nach einer Korrelation zwischen der zeitlichen Entwicklung dieser physikalischen Größe, die von jedem der ersten bzw. zweiten Sensoren gemessen wird, umfasst;
    - eine Tangentialrichtung zur Bewegungsbahn des Objekts im Bereich eines selben Sensors unter dem ersten und zweiten Sensor für jeden der bestimmten Zeitpunkte t zu berechnen;
    - automatisch die von dem beweglichen Objekt bei seiner Verlagerung verfolgte Bewegungsbahn wiederherzustellen (26), mit Hilfe einer Interpolation für jeden bestimmten Referenzzeitpunkt auf Basis:

    • der kumulierten gekrümmten Distanz zu diesem Referenzzeitpunkt entlang der Bewegungsbahn, und
    • der für diesen Referenzzeitpunkt berechneten Tangente.

## Claims

1. Method for determining the trajectory of a mobile object, **characterized in that** it includes:

    - the provision of a mobile object (2) including a first sensor (4) and a second sensor (6) mechanically interconnected and configured to measure at least one same physical parameter at different points of said object;
    - the movement (20) of said first and second sensors along the same trajectory (TR), there remaining between said first and second sensors a distance D that is constant to within 2% during the movement, the distance D being defined as the curvilinear abscissa separating said first and second sensors measured along said trajectory;

- the measurement during the movement of said at least one same physical parameter by said first and second sensors, said physical parameter being chosen in the group comprising a luminous intensity, a magnetic field, the acceleration due to gravity, the electromagnetic field, a temperature, an atmospheric pressure, a flight time, an image, an acoustic field, a seismic field or an acceleration;

- the determination (22) of the times, termed reference times (t), for which the mobile object has traveled a cumulative curvilinear distance along said trajectory that is equal to an integer multiple of the distance D, this determination including, for said measured at least one same physical parameter, seeking a correlation between the temporal evolution of the respective physical parameter measured by each of said first and second sensors;

- the calculation (24) of a direction tangential to the trajectory of the object at the level of the same first or second sensor for each of the instants t so determined;

- the automatic reconstruction (26) of the trajectory followed by the mobile object during its movement by means of an interpolation and on the basis, for each reference time so determined:

  • of the cumulative curvilinear distance along the trajectory at that reference time, and
  • of said tangent calculated for that reference time.

2. Method according to Claim 1, in which the reference times are determined progressively for successive times and this determination includes the determination of a time $t_i$ from a known time $t_{i-1}$, the times $t_i$ and $t_{i-1}$ designating two successive reference times, the index i being a natural integer, this determination including, for said at least one physical parameter:

  - the automatic calculation of a correlation between the values of said at least one physical parameter measured over time by each of the first and second sensors over a sampling time interval with its origin at the time $t_{i-1}$ and having a duration T;

  - the automatic calculation of a temporal offset dt between, on the one hand, the time for which the correlation function has a maximum over the range [-T, T] and, on the other hand, the origin of the range [-T, T];

  - then, the calculation of the value of the time $t_i$ determined by means of the formula $t_i = t_{i-1} + dt$.

3. Method according to Claim 2, in which:

- the first sensor (4) and the second sensor (6) are configured to measure N physical parameters, N being an integer greater than two;

- the determination of the reference times includes:

  - for each of the N physical parameters, the automatic calculation of said correlation function and the automatic calculation of said temporal offset dt on the basis of the respective correlation function,

  - then, the calculation of the average offset $dt_{moy}$ defined as the average of the calculated time offsets dt, the value of the time $t_i$ that has been determined being given by the formula $t_i = t_{i-1} + dt_{moy}$.

4. Method according to Claim 3, in which:

  - for each of the N physical parameters, the offset dt is calculated only if the calculated value of the correlation function is above a predefined threshold, and is not calculated otherwise;

  - the temporal offsets are averaged on the basis only of the calculated offsets dt.

5. Method according to any one of the preceding claims, in which said tangential direction is measured by means of an attitude module (8) belonging to said object.

6. Method according to any one of the preceding claims, in which the physical parameter is a parameter reflecting the position of said sensor relative to a predefined spatial frame of reference, such as an inclination or rotation angle.

7. Method according to any one of the preceding claims, including, for each of the times t that have been determined, the calculation of the Serret-Frenet frame associated with the calculated tangential direction and in which the automatic reconstruction of the trajectory is furthermore interpolated on the basis of said frame.

8. Method according to any one of the preceding claims, in which the mobile object (2) moves over a surface.

9. Method according to any one of the preceding claims, in which the first sensor (4) and the second sensor (6) are mechanically connected so as to have the same attitude for the same curvilinear abscissa on the trajectory.

10. Method for detection of the difference between the trajectory of a mobile object and a reference trajectory, including:

- the acquisition (40) of a reference trajectory that the object must follow when it moves;
- the determination (42) of the trajectory followed by the object when it moves;
- the comparison (44) of the trajectory that has been determined and the reference trajectory;
- the sending (46) of an alarm signal if a difference greater than a predetermined value is detected between said trajectory that has been determined and said reference trajectory, no alarm signal being sent otherwise;

this method being **characterized in that** the trajectory of the object is determined according to any one of the preceding claims.

11. Method according to Claim 10, in which the distance D is strictly less than 2*F, where F is the spatial frequency of the angle functions that define the tangent to the reference trajectory.

12. Information storage medium (12), **characterized in that** it includes instructions for executing, on an electronic calculator, a method for evaluating the data provided by a mobile object comprising two sensors linked mechanically with a constant distance between them, according to any one of the preceding claims.

13. Electronic calculator (10) for executing a method for evaluating the data provided by a mobile object comprising two sensors, according to a method according to any one of Claims 1 to 11, **characterized in that** it is programmed:

- to determine times, termed reference times (t), at which a mobile object (2) including a first sensor (4) and a second sensor (6):

    • that are mechanically interconnected,
    • that are configured to measure at least one same physical parameter at different points of said object, and
    • that remain at a distance D relative to one another that is constant to within 2% during the movement, the distance D being defined as the curvilinear abscissa separating said sensors,

has traveled a cumulative curvilinear distance along said trajectory that is equal to an integer multiple of the distance D, this determination including, for said at least one same physical parameter that is measured, seeking a correlation between the respective temporal evolution of that physical parameter measured by each of said first and second sensors;
- to calculate a direction tangential to the trajectory of the object at the level of the same first or second sensor for each of the times t that has been determined;
- to reconstruct (26) automatically the trajectory followed by the mobile object during its movement by means of an interpolation and on the basis, for each reference time so determined:

    • of the cumulative curvilinear distance along the trajectory at that reference time, and
    • of said tangent calculated for that reference time.

Fig. 1

Fig. 2

Fig. 3

Fig. 4A

Fig. 4B

Fig. 5A

Fig. 5B

Fig. 6

Fig. 7

Fig. 8

Fig. 9

Fig. 10

## RÉFÉRENCES CITÉES DANS LA DESCRIPTION

**Documents brevets cités dans la description**

- US 20080195316 A
- GB 2086055 A

**Littérature non-brevet citée dans la description**

- **NATHALIE SPRYNSKI.** Reconstruction de courbes et surfaces à partir de données tangentielles. Université Joseph Fourier, 2007
- **MATHIEU HUARD.** Modélisation géométrique et reconstruction de formes équipées de capteurs d'orientation. Université Joseph Fourier, 2013